# EUROPEAN PATENT SPECIFICATION

(11) **EP 3 627 583 B1**
(45) Date of publication and mention of the grant of the patent: **30.11.2022**
(21) Application number: 18802546.4
(22) Date of filing: 28.04.2018
(51) Int. Cl.: H01M 50/119, H01M 50/121, H01M 50/531

(54) **ELECTRONIC EQUIPMENT BATTERY AND ELECTRONIC EQUIPMENT**
BATTERIE EINES ELEKTRONISCHEN GERÄTS UND ELEKTRONISCHES GERÄT
BATTERIE D'ÉQUIPEMENT ÉLECTRONIQUE ET ÉQUIPEMENT ÉLECTRONIQUE

(30) Priority: 19.05.2017 CN 201710361299; 19.05.2017 CN 201720569798 U
(43) Date of publication of application: 25.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: HU, Zhihua, Dongguan Guangdong 523860 (CN); ZHANG, Wenzhen, Dongguan Guangdong 523860 (CN); LV, Gaoli, Dongguan Guangdong 523860 (CN); ZHANG, Hui, Dongguan Guangdong 523860 (CN)
(74) Representative: Manitz Finsterwald Patent- und Rechtsanwaltspartnerschaft mbB
(86) International application number: PCT/CN2018/085098
(87) International publication number: WO 2018/210123

(56) References cited:
- CN-A- 107 039 617
- CN-A- 107 093 684
- CN-U- 205 490 523
- CN-U- 205 609 589
- CN-U- 206 742 336
- US-A1- 2014 355 207
- US-A1- 2017 033 335

## Description

### Technical Field

The application relates to the technical field of communication devices, and more particularly to a battery for an electronic device and an electronic device.

### Background

In a related art, a battery is fixed in an electronic device mostly by adopting a double-sided adhesive tape. For example, a lithium battery of a smart phone is adhered to a rear cover of the phone through at least one easy-to-pull adhesive tape. In order to dismount the battery of the phone, the easy-to-pull adhesive tape can be pulled to take the battery out of the rear cover by the easy-to-pull adhesive tape. However, the easy-to-pull adhesive tape is easily broken in a pulling process due to its characteristics of softness, high deformation rate and high stickiness, and a wrapping layer on the battery is easily deformed by the pulling force of the easy-to-pull adhesive tape. Related art is known from US 2017/033335 A1 and CN 205 490 523 U.

### Summary

The invention is defined by the independent claims. The application is intended to at least solve one of the technical problems in a related art. To this end, the application provides a battery for an electronic device. The battery for the electronic device has the advantages of simple structure, strong structural strength and easiness for dismounting.

The application provides an electronic device, which includes the abovementioned battery for the electronic device.

A battery for an electronic device according to embodiments of the application includes: a body module having a first surface and a second surface that are oppositely provided; a component module coupled to the body module; a wrapping layer configured to wrap the component module; a first insulating film arranged on the first surface, wherein a part of the first insulating film extends to the component module and is adhered to the wrapping layer; a second insulating film arranged on the second surface, wherein a part of the second insulating film extends to the component module and is adhered to the wrapping layer; and at least one easy-to-pull adhesive tape, each including an adhesion portion, an adhesive-free region and a hand pulling portion. The adhesion portion is located at one end of the easy-to-pull adhesive tape and adhered to the second surface, the hand pulling portion is located at the other end of the easy-to-pull adhesive tape, the hand pulling portion bypasses the component module and is then overlapped with the first insulating film, the hand pulling portion is located on a side, away from the component module, of the first insulating film, the adhesive-free region is located between the adhesion portion and the hand pulling portion, and the adhesive-free region is bonded to the wrapping layer.

According to the battery for the electronic device in the embodiments of the application, the body module and the component module are integrated by use of the first insulating film and the second insulating film, and the easy-to-pull adhesive tape is provided with the adhesive-free region which is bonded to the wrapping layer, so that when the easy-to-pull adhesive tape is pulled, an external force can be transmitted to the whole battery to exert uniform stress on the body module, the component module and the easy-to-pull adhesive tape, thereby reducing the probability of stress concentration at a specific position of the easy-to-pull adhesive tape. By virtue of the solution, the easy-to-pull adhesive tape can be effectively prevented from being broken, meanwhile, the easy-to-pull adhesive tape can also be prevented from deforming the films wrapping the body module or the component module, and the body module and the component module can be conveniently dismounted from a shell.

An electronic device according to the embodiments of the application includes a shell, at least one reinforcing rib being arranged on an inner surface of the shell; and the abovementioned battery for the electronic device, the battery being close to the at least one reinforcing rib.

According to the electronic device in the embodiments of the application, the body module and the device body are integrated by use of the first insulating film and the second insulating film, and the easy-to-pull adhesive tape is provided with the adhesive-free region which is bonded to the wrapping layer, so that when the easy-to-pull adhesive tape is pulled, an external force can be transmitted to the whole battery to exert uniform stress on the body module, the component module and the easy-to-pull adhesive tape, thereby reducing the probability of stress concentration at a specific position of the easy-to-pull adhesive tape. By virtue of the solution, the easy-to-pull adhesive tape can be effectively prevented from being broken, meanwhile, the easy-to-pull adhesive tape can also be prevented from deforming the films wrapping the body module or the component module, and the body module and the component module can be conveniently dismounted from the shell.

### Brief Description of the Drawings

The abovementioned and/or additional aspects and advantages of the application will become apparent and easy to understand from descriptions made to the embodiments in combination with the following drawings.
Fig. 1 is an exploded view of a battery for an electronic device according to an embodiment of the application;
Fig. 2 is an exploded view of a battery for an electronic device according to an embodiment of the application;
Fig. 3 is an exploded view of a local structure of an electronic device according to an embodiment of the application;
Fig. 4 is a sectional view of a local structure of an electronic device according to an embodiment of the application;
Fig. 5 is a partial enlarged schematic diagram of part A in Fig. 4;
Fig. 6 is a partial enlarged schematic diagram of part B in Fig. 5;
Fig. 7 is a sectional view of a local structure of an electronic device according to an embodiment of the application;
Fig. 8 is a sectional view of a local structure of an electronic device according to an embodiment of the application;
Fig. 9 is a local structure diagram of an electronic device according to an embodiment of the application, in which a hand pulling portion of an easy-to-pull adhesive tape is extended;
Fig. 10 is a local structure diagram of an electronic device according to an embodiment of the application, in which a hand pulling portion of an easy-to-pull adhesive tape is stretched; and
Fig. 11 is a structure diagram of an electronic device according to an embodiment of the application.

Reference signs:
electronic device 200,
battery 100,
body module 1, first surface 11, second surface 12, battery tab 13, third surface 14, fourth surface 15, aluminum-plastic film 16, adhesion region 17,
component module 2, protective plate 21, electrical component 22,
wrapping layer 3, first wrapping portion 31, second wrapping portion 32, through hole 33,
first insulating film 4,
second insulating film 5,
easy-to-pull adhesive tape 6, adhesion portion 61, adhesive-free region 62, hand pulling portion 63,
shell 7, reinforcing rib 71, groove 72, mounting cavity 73, independent cavity 74,
display unit 8, button assembly 9.

### Detailed Description of the Embodiments

In the description of the application, it is to be noted that, unless otherwise clearly specified and defined, terms "mounting", "coupled" and "coupling" shall be generally understood. For example, the terms may represent fixed coupling, and may also represent detachable coupling, or integrated coupling. the terms may represent mechanical coupling, and may also represent electric coupling. The terms may represent direct coupling, and may also represent indirect coupling through an intermediate. The terms may represent internal communication between two elements. Those of ordinary skill in the art can understand specific meanings of the foregoing terms in the application according to specific situations.

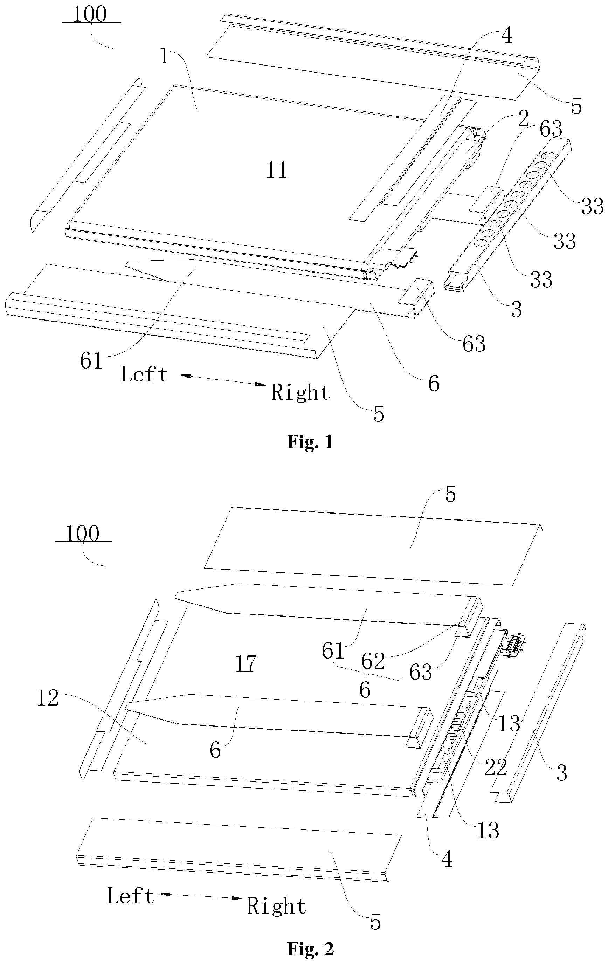

A battery 100 for an electronic device 200 and electronic device 200 according to the embodiments of the application will be described below with reference to Fig. 1 to Fig. 11 in detail.

It is to be noted that, in the embodiments of the application, an "electronic device" (or called a "terminal" and a "mobile terminal") used here includes, but not limited to, a device configured to receive and/or send a communication signal through a wireline connection (for example, a Public Switched Telephone Network (PSTN), a Digital Subscriber Line (DSL), a digital cable, a direct cable connection and/or other types of data connections/networks), and/or through a wireless interface (of, for example, a cellular network, a Wireless Local Area Network (WLAN), a digital television network like a Digital Video Broadcasting Handheld (DVB-H) network, a satellite network, an Amplitude Modulation (AM)-Frequency Modulation (FM) broadcast transmitter and/or other communication terminals). A communication terminal configured to communicate through a wireless interface may be called a "wireless communication terminal", a "wireless terminal" and/or a "mobile terminal". Examples of the mobile terminal include, but not limited to: a satellite phone or a cell phone; a Personal Communication System (PCS) terminal capable of integrating a cellular radio phone and data processing, faxing and data communication capabilities; a radio phone, a pager, Internet/intranet access, a Web browser, a memo pad, a calendar and a Personal Digital Assistant (PDA) equipped with a Global Positioning System (GPS) receiver; and a conventional laptop and/or palmtop receiver or another electronic device including a radio phone transceiver.

The electronic device may be various devices capable of acquiring data from the outside and processing the data, or, the electronic device may be various devices provided with built-in batteries and capable of acquiring currents from the outside and charging the batteries, for example, a mobile phone, a tablet computer, a computing device or an information display device.

As shown in Fig. 1 to Fig. 10, a battery 100 for an electronic device 200 according to the embodiments of the application includes a body module 1, a component module 2, a wrapping layer 3, a first insulating film 4, a second insulating film 5 and at least one easy-to-pull adhesive tape 6.

As shown in Fig. 1, the body module 1 may be a cell body of the battery 100. Some substance and parts, such as an electrolyte, capable of generating electric potential energy or storing the electric potential energy may be wrapped in the body module 1. The body module 1 is provided with a first surface 11 and a second surface 12 that are oppositely arranged. The component module 2 is coupled to the body module 1, and has to include an electrical component 22 configured to test performance of the battery 100. The wrapping layer 3 may be configured to wrap the component module 2 to protect the component module 2.

As shown in Fig. 1 to Fig. 2 and Fig. 5 to Fig. 8, the first insulating film 4 is arranged on the first surface 11, a part of the first insulating film 4 extends to the component module 2 and is adhered to the wrapping layer 3; the second insulating film 5 is arranged on the second surface 12, and a part of the second insulating film 5 extends to the component module 2 and is adhered to the wrapping layer 3. By virtue of this arrangement, the body module 1 and component module 2 that are originally independent of each other can be integrated through the first insulating film 4 and the second insulating film 5. The first insulating film 4 and the second insulating film 5 may be film structures formed from an insulating material (for example, polyethylene (PE)), and may be sticky to package the body module 1 or the component module 2.

As shown in Fig. 2, the easy-to-pull adhesive tape 6 may be an auxiliary part for dismounting the battery 100, and may include an adhesion portion 61, an adhesive-free region 62 and a hand pulling portion 63. The adhesion portion 61 is located at one end of the easy-to-pull adhesive tape 6 and adhered to the second surface 12. The hand pulling portion 63 is located at the other end of the easy-to-pull adhesive tape 6, the hand pulling portion 63 bypasses the component module 2 and is then overlapped with the first insulating film 4, the hand pulling portion 63 is located on the side, away from the component module 2, of the first insulating film 4. According to the invention, the adhesive-free region 62 is located between the adhesion portion 61 and the hand pulling portion 63, and the adhesive-free region 62 is bonded to the wrapping layer 3.

It is to be noted that, in the adhesive-free region 62, at least one surface in the surface, facing the component module 2, of the easy-to-pull adhesive tape 6 and the surface, away from the component module 2, of the easy-to-pull adhesive tape 6 is a surface with relatively poor stickiness or without stickiness.

The easy-to-pull adhesive tape 6 is an adhesion material and includes a thermoplastic polyurethane (TPU) thin film and rubber glue. Glue (for example, rubber glue) may be arranged on at least one side in upper and lower lateral surfaces of the TPU thin film. The rubber glue includes the following raw materials in parts by weight: 30 to 50 parts of thermoplastic rubber, 30 to 50 parts of a C5 petroleum resin, 20 to 40 parts of a terpene resin, 1 to 10 parts of a plasticizer, 0.1 to 2 parts of a pigment, 1 to 5 parts of polyisobutylene and 100 to 2,000 parts of toluene. The TPU thin film is 30 to 100 microns thick, and the rubber glue is 20 to 50 microns thick. The rubber glue is applied to the TPU thin film in a coating manner.

When the battery 100 is dismounted from a shell 7 of the electronic device 200, the hand pulling portion 63 of the easy-to-pull adhesive tape 6 may be pulled to pry the body module 1 and the component module 2 up. Since the adhesion portion 61 of the easy-to-pull adhesive tape 6 is adhered to the second surface 12, the easy-to-pull adhesive tape 6 can drive the battery 100 to move, so that the battery 100 can be dismounted from the shell 7. The adhesive-free region 62 of the easy-to-pull adhesive tape 6 is bonded to the wrapping layer 3, so that resistance to the easy-to-pull adhesive tape 6 may be reduced when the easy-to-pull adhesive tape 6 starts to be pulled, and the probability that the easy-to-pull adhesive tape 6 is broken may be reduced.

In the related art, a wrapping layer with relatively high stickiness wraps the component module, and because an adhesion stress between the wrapping layer with the relatively high stickiness and a first insulating layer or a second insulating layer or an adhesion stress between the wrapping layer and the easy-to-pull adhesive tape is relatively strong, when the easy-to-pull adhesive tape drives the battery, stress concentration is easily formed at the position, contacting with an edge of the battery, of the easy-to-pull adhesive tape, making the easy-to-pull adhesive tape be easily broken by the component module.

According to the battery 100 for the electronic device 200 in the embodiments of the application, the body module 1 and the component module 2 are integrated by use of the first insulating film 4 and the second insulating film 5, the easy-to-pull adhesive tape 6 is provided with the adhesive-free region 62 which is bonded to the wrapping layer 3, so that when the easy-to-pull adhesive tape 6 is pulled, an external force can be transmitted to the whole battery 100 to exert uniform stress on the body module 1, the component module 2 and the easy-to-pull adhesive tape 6, thereby reducing the probability of stress concentration at a specific position of the easy-to-pull adhesive tape 6. By virtue of the solution, the easy-to-pull adhesive tape 6 can be effectively prevented from being broken, meanwhile, the easy-to-pull adhesive tape 6 can also be prevented from deforming the films wrapping the body module 1 or the component module 2, and the body module 1 and the component module 2 can be conveniently dismounted from the shell 7. In addition, arrangement of the adhesive-free region can effectively reduce adhesion of an adhesive substance on the easy-to-pull adhesive tape 6 to the body module 1 or the component module 2, and thus certain surface cleanliness can still be ensured in a dismounting process of the battery 100.

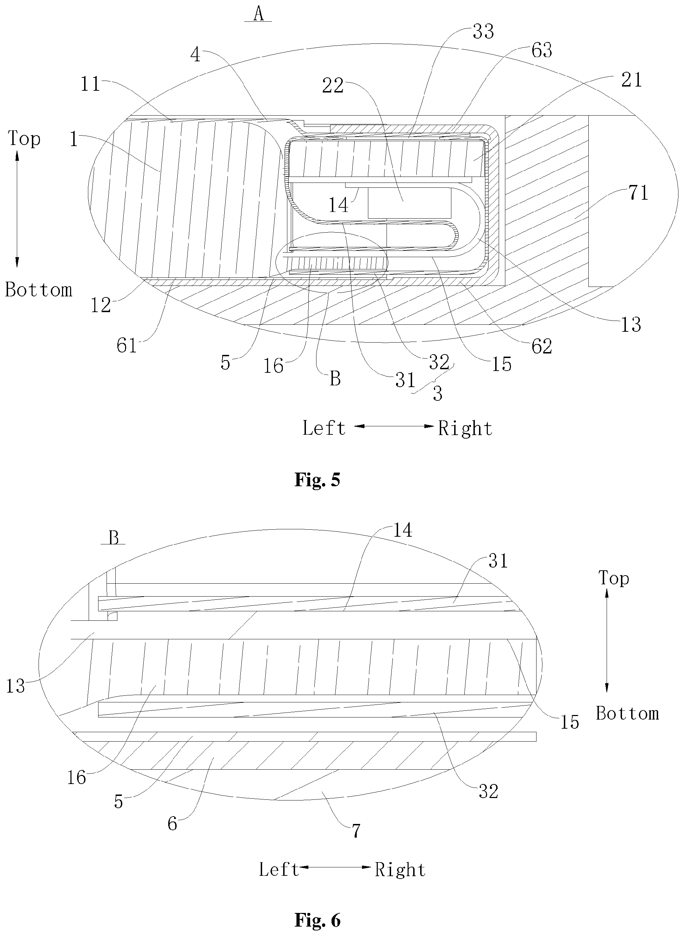

According to an embodiment of the application, stickiness of both the first insulating film 4 and the second insulating film 5 is higher than stickiness of the wrapping layer 3. Therefore, structural strength of the component module 2 can be strengthened, and integrity of the body module 1 and the component module 2 can also be improved. When the easy-to-pull adhesive tape 6 is pulled, the external force can be transmitted to the whole battery 100 to exert uniform stress on the body module 1, the component module 2 and the easy-to-pull adhesive tape 6, thereby reducing the probability of stress concentration at a specific position of the easy-to-pull adhesive tape 6. For further improving the structural strength of the component module 2 and preventing the component module 2 from being damaged when the easy-to-pull adhesive tape 6 is pulled, in an example shown in Fig. 5, Fig. 7 and Fig. 8, a protective plate 21 may be arranged in the component module 2. Of course, the protective plate 21 is also beneficial for protecting the electrical component 22 in the component module 2.

According to an embodiment of the application, at least one through hole 33 is formed at the position, adhered to the first insulating film 4, of the wrapping layer 3. As shown in Fig. 1 and Fig. 5, at least one through hole 33 is formed in the wrapping layer 3. When the first insulating film 4 is adhered to the wrapping layer 3, the first insulating film 4 covers the at least one through hole 33, and when the first insulating film 4 is pressed at the position of the at least one through hole 33, a part of the first insulating film 4 may be pressed into the at least one through hole 33 so that the first insulating film 4 in the at least one through hole 3 can be directly adhered to the component module 2 to couple the body module 1 to the component module 2 more stably, thereby further improving the integrity of the body module 1 and the device body 2. Furthermore, as shown in Fig. 1, there may be multiple through holes 33 that are spaced, so that coupling stability of the body module 1 and the component module 2 may further be improved, and the integrity of the body module 1 and the component module 2 may be enhanced.

As shown in Fig. 5 and Fig. 6, for further improving the integrity of the body module 1 and the component module 2, in some examples of the application, a part of an edge of an aluminum-plastic film 16 for wrapping the body module 1 extends into the component module 2 and is wrapped with the wrapping layer 3. Furthermore, as shown in Fig. 6, the first insulating film 4 or the second insulating film 5 covers a portion, for connecting with the component module 2, of the aluminum-plastic film 16. It can be understood that a part of the aluminum-plastic film 16 extends into the wrapping layer 3 and the first insulating film 4 or the second insulating film 5 covers the portion, for connecting with the wrapping layer 3, of the aluminum-plastic film 16, so that an edge of the wrapping layer 3 can also be prevented from being tilted.

According to an embodiment of the application, as shown in Fig. 5 to Fig. 8, a battery tab 13 of the body module 1 extends from the body module 1 and is wrapped with the wrapping layer 3, and the battery tab 13 includes a third surface 14 and fourth surface 15 arranged opposite to each other, so that the battery 100 may be endowed with higher integrity. The wrapping layer 3 may include a first wrapping portion 31 and a second wrapping portion 32 coupled to the first wrapping portion 31, the first wrapping portion 31 wraps the side, close to the third surface 14, of the battery tab 13, the second wrapping portion 32 wraps the side, close to the fourth surface 15, of the battery tab 13, and at least one of the first wrapping portion 31 and the second wrapping portion 32 extends wriggly. It can be understood that, in the component module 2, the wrapping layer 3 may be arranged in a lamination manner to form a multilayer structure, so that the structural strength of the component module 2 can be strengthened, and the component module 2 can be prevented from being deformed in a pulling process of the easy-to-pull adhesive tape 6.

According to some embodiments of the application, a portion, bonded to the at least one easy-to-pull adhesive tape 6, of the wrapping layer 3 is a Teflon film. It is to be noted that the Teflon film may be a film structure made from a Teflon material. Teflon may be called polytetrafluoroethylene (PTFE) or may be called a "non-stick coating", an "easy-to-clean material", "king of plastic" or "halar". This material has the characteristics of resistance to acids, resistance to alkalis and resistance to various organic solvents. In addition, PTFE has the characteristic of resistance to high temperatures and a lubrication effect, and is extremely low in friction coefficient.

Of course, the structure of the wrapping layer 3 is not limited thereto. For example, in some other embodiments of the application, the portion, bonded to the at least one easy-to-pull adhesive tape 6, of the wrapping layer 3 is coated with a Teflon layer, so that cost may be reduced. For another example, the whole wrapping layer 3 is a Teflon film, so that a process for the wrapping layer 3 may be simplified. For another example, the wrapping layer 3 is a silicone adhesive layer. A silicone adhesive (or called SILICONE) is an organosilicon product like an ointment, and, after contacting with water in the air, may be cured into a tough rubber solid. The silicone adhesive is mainly divided into a de-acetic type, a dealcoholized type, a deaminated type and a de-propyl type, and all polymers including chemical components polydimethylsiloxane and silicon dioxide may be called silicone. The silicone adhesive is usually used for adhering and sealing glass, and thus is called a glass cement. The silicone adhesive is strong in adhesive strength and tensile strength, and also has the characteristics of weather resistance, vibration resistance, moisture resistance, odor resistance and adaptability to great thermal changes.

For improving coupling stability of the battery 100 and other parts, in an example of the application, as shown in Fig. 2, an adhesion region 17 is arranged on the sidewall surface, adhered to the adhesion portion 61, of the body module 1, and stickiness in the adhesion region 17 gradually increases in a direction from the adhesive-free region 62 to the adhesion portion 61. That is, the second surface 12 is suitable to be adhered to the shell 7 of the electronic device 200, and the adhesion region 17 may be arranged on the second surface 12.

It can be understood that, for conveniently pulling one end of the battery 100 up by use of the easy-to-pull adhesive tape 6, a material with relatively low stickiness may be arranged at a position close to the end portion. For improving the coupling stability and firmness between the battery 100 and the other parts, a material with relatively high stickiness is arranged at a portion close to the other end of the battery 100. The adhesive-free region of the easy-to-pull adhesive tape 6 is close to one end of the battery 100 and the adhesion portion 61 of the easy-to-pull adhesive tape 6 is close to the other end of the battery 100. For example, as shown in Fig. 2, on the surface, for connecting with the adhesion portion 61 of the easy-to-pull adhesive tape 6, of the body module 1, the stickiness of the adhesion region 17 gradually decreases in a direction from left to right (a left-right direction shown in Fig. 2).

For conveniently pulling the hand pulling portion 63, in an example of the application, the hand pulling portion 63 of the easy-to-pull adhesive tape 6 may be a ring structure, and may also be a strip structure or a flaky structure. According to an embodiment of the application, there may be multiple easy-to-pull adhesive tapes 6 that are spaced. Therefore, when the body module 1 and the component module 2 are dismounted from the shell 7 by use of the easy-to-pull adhesive tape 6, the external force may be applied to the multiple easy-to-pull adhesive tapes 6, so that the external force may be decentralized to the battery 100, and the battery 100 may be uniformly stressed.

In an example shown in Fig. 2, there are two easy-to-pull adhesive tapes 6. Furthermore, the two easy-to-pull adhesive tapes 6 may form an intersected structure, and through the intersected structure of the adhesive tapes, coupling reliability of the adhesive tapes may be improved to prevent a dismounting failure caused by breakage of the adhesive tapes in a dismounting process of the battery 100. The two easy-to-pull adhesive tapes 6 are intersected in a center of the body module 1, and end portions of the two easy-to-pull adhesive tapes 6 extend towards four corners of the body module 1 respectively, and are adhered to the four corners of the body module 1 respectively. Through this structure, the coupling reliability of the body module 1 and the easy-to-pull adhesive tape 6 may be improved to prevent the dismounting failure caused by breakage of the easy-to-pull adhesive tape 6 in the dismounting process of the battery 100. Of course, an arrangement manner for the two easy-to-pull adhesive tapes 6 is not limited to the above arrangement example. For example, the two easy-to-pull adhesive tapes 6 may be arranged in parallel with each other.

In each embodiment, an adhesive may be arranged at any position of the adhesive tapes. For example, the adhesive may be arranged at two end portions of each adhesive tape and an intersection of the two adhesive tapes only, and the adhesive is adhered to the battery 100. That is, the battery 100 is coupled to the easy-to-pull adhesive tape 6 through five points. Therefore, particularly in the solution that the four end portions of the two adhesive tapes are adhered to the four corners of the adhesion portion 61 respectively, the coupling reliability of the body module 1 and the easy-to-pull adhesive tape 6 may further be improved to prevent the dismounting failure caused by breakage of the adhesive tape in the dismounting process of the battery 100, and meanwhile, materials are saved.

As shown in Fig. 1 to Fig. 11, an electronic device 200 according to the embodiments of the application includes a shell 7 and the abovementioned battery 100 for the electronic device 200.

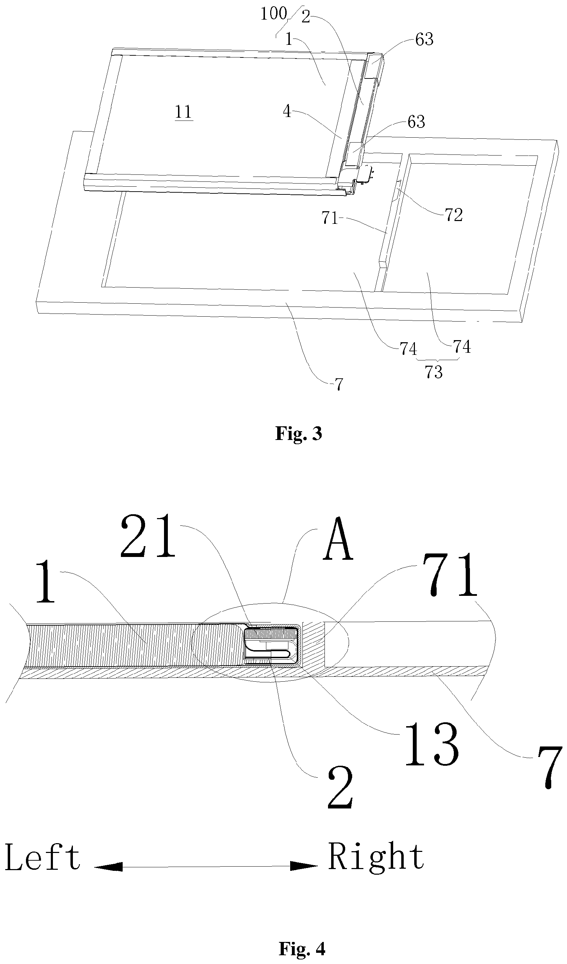

The shell 7 may define a mounting cavity 73, and components (for example, a main board) of the electronic device 200 may be mounted in the mounting cavity 73 and coupled to the shell 7. As shown in Fig. 3, Fig. 9 and Fig. 10, at least one reinforcing rib 71 is arranged on an inner surface of the shell 7, and the at least one reinforcing rib 71 may be configured to support the shell 7 to strengthen structural strength of the shell 7. Moreover, the at least one reinforcing rib 71 divides the mounting cavity 73 into multiple independent cavities 74, and the components of the electronic device 200 may be placed in the corresponding independent cavities 74. As shown in Fig. 3, the battery 100 is placed in the independent cavity 74 and locates close to the corresponding reinforcing rib 71.

According to the electronic device 200 in the embodiments of the application, a body module 1 and a component module 2 are integrated by use of a first insulating film 4 and a second insulating film 5, an easy-to-pull adhesive tape 6 is provided with an adhesive-free region 62 which is bonded to a wrapping layer 3, so that when the easy-to-pull adhesive tape 6 is pulled, an external force can be transmitted to the whole battery 100 to exert uniform stress on the body module 1, the component module 2 and the easy-to-pull adhesive tape 6, thereby reducing the probability of stress concentration at a specific position of the easy-to-pull adhesive tape 6. By virtue of the solution, the easy-to-pull adhesive tape 6 can be effectively prevented from being broken, meanwhile, the easy-to-pull adhesive tape 6 can also be prevented from deforming the films wrapping the body module 1 or the component module 2, and the body module 1 and the component module 2 can be conveniently dismounted from the shell 7.

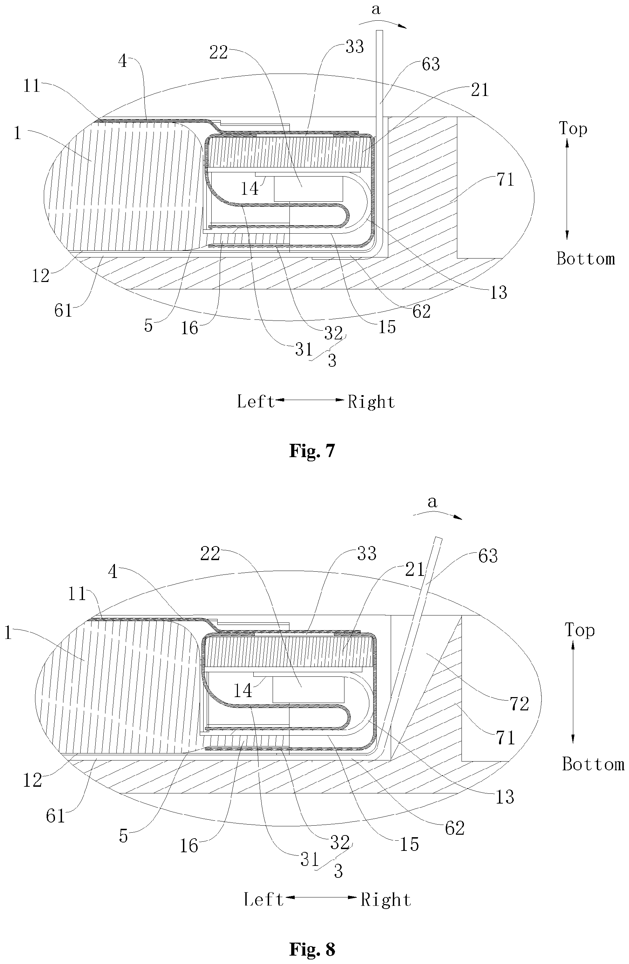

According to an embodiment of the application, as shown in Fig. 8, a part of the adhesive-free region 62 of the easy-to-pull adhesive tape 6 is opposite to one reinforcing rib 71, a groove 72 is formed in a portion, corresponding to the adhesive-free region 62, of the reinforcing rib 71, and an opening of the groove 72 faces the easy-to-pull adhesive tape 6. In such a manner, when the easy-to-pull adhesive tape 6 is pulled, a hand pulling portion 63 of the easy-to-pull adhesive tape 6 may be inclined towards the inside of the groove 72 (direction indicated by the arrowhead a in Fig. 7 and Fig. 8), and the body module 1 and the component module 2 may be pulled out along an inclination direction of the easy-to-pull adhesive tape 6, so that the external force may be uniformly transmitted to the battery 100 to avoid the easy-to-pull adhesive tape 6 being broken by excessive local stress.

As shown in Fig. 5 and Fig. 7 to Fig. 8, according to some embodiments of the application, the adhesive-free region 62 is located in a corner of the component module 2, and the corner is located between the shell 7 and the corresponding reinforcing rib 71. When the battery 100 is dismounted from the shell 7 of the electronic device 200, the hand pulling portion 63 of the easy-to-pull adhesive tape 6 may be pulled to slowly pry the body module 1 and the component module 2 up to exert uniform stress on the body module 1, the component module 2 and the easy-to-pull adhesive tape 6, thereby reducing the probability of stress concentration at a specific position of the easy-to-pull adhesive tape 6. By virtue of the solution, the easy-to-pull adhesive tape 6 can be effectively prevented from being broken, meanwhile, the easy-to-pull adhesive tape 6 can also be prevented from deforming the films wrapping the body module 1 or the component module 2, and the body module 1 and the component module 2 can be conveniently dismounted from the shell 7.

The electronic device 200 according to the embodiments of the application will be described below with reference to Fig. 1 to Fig. 11 in detail. It is to be understood that the following descriptions are only exemplary descriptions and not intended to form specific limits to the application.

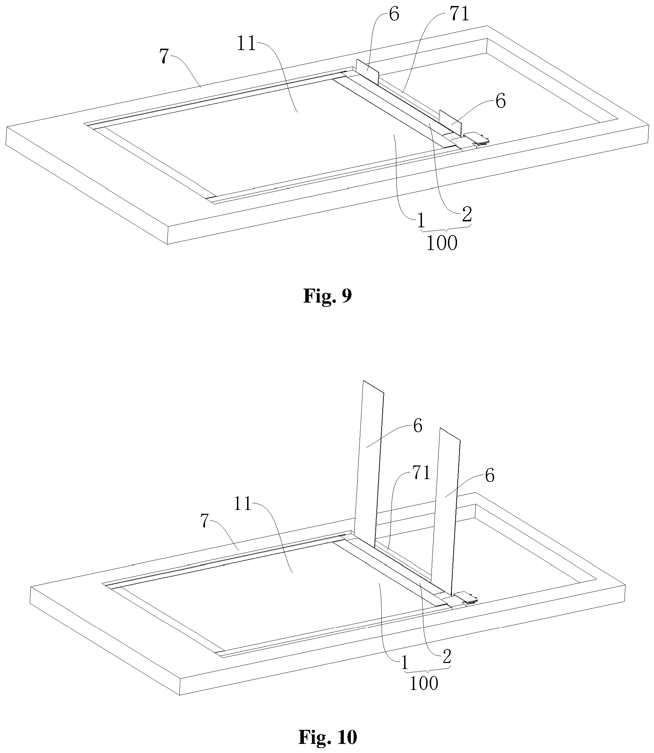

As shown in Fig. 9 to Fig. 11, an electronic device 200 includes a shell 7, a display unit8, a button assembly 9 and a battery 100.

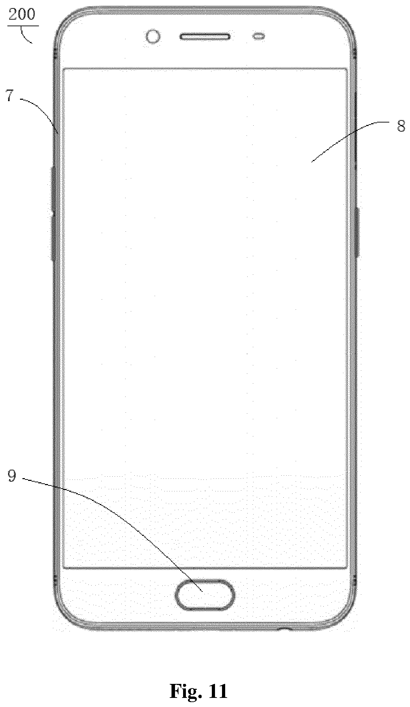

As shown in Fig. 11, the display unit 8 and the button assembly 9 may be embedded on an outer surface of the shell 7. A mounting cavity 73 may be defined in the shell 7, and a main board and battery 100 of the electronic device 200 may be mounted in the mounting cavity 72 and coupled to the shell 7. As shown in Fig. 3, Fig. 9 and Fig. 10, at least one reinforcing rib 71 is arranged on an inner surface of the shell 7, and the at least one reinforcing rib 71 may be configured to support the shell 7 to strengthen structural strength of the shell 7. Moreover, the at least one reinforcing rib 71 divides the mounting cavity 73 into multiple independent cavities 74, and the battery 100 is placed in one independent cavity 74 and close to the corresponding reinforcing rib 71.

As shown in Fig. 1 to Fig. 8, the battery 100 includes a body module 1, a component module 2, a wrapping layer 3, a first insulating film 4, a second insulating film 5 and at least one easy-to-pull adhesive tape 6.

As shown in Fig. 1, the body module 1 may be a cell body of the battery 100. Some substance and parts, such as an electrolyte, capable of generating electric potential energy or storing the electric potential energy may be wrapped in the body module 1. The body module 1 is provided with a first surface 11 and a second surface 12 that are oppositely arranged. The component module 2 is coupled to the body module 1, and may include an electrical component 22 configured to test performance of the battery 100. The wrapping layer 3 may be configured to wrap the component module 2, and the wrapping layer 3 may be configured to protect the component module 2.

As shown in Fig. 1 to Fig. 2 and Fig. 5 to Fig. 8, the first insulating film 4 is arranged on the first surface 11, a part of the first insulating film 4 extends to the component module 2 and is adhered to the wrapping layer 3; the second insulating film 5 is arranged on the second surface 12, and a part of the second insulating film 5 extends to the component module 2 and is adhered to the wrapping layer 3. By virtue of this arrangement, the body module 1 and component module 2 that are originally independent of each other can be integrated through the first insulating film 4 and the second insulating film 5. The first insulating film 4 and the second insulating film may be film structures formed from an insulating material, and may be sticky to package the body module 1 or the component module 2. Both the first insulating film 4 and the second insulating film 5 may be PE insulating films, and the first insulating film 4 and the second insulating film 5 may be located on an edge of the body module 1 or close to the edge of the body module 1.

Stickiness of both the first insulating film 4 and the second insulating film 5 is higher than stickiness of the wrapping layer 3. Therefore, structural strength of the component module 2 can be strengthened, and integrity of the body module 1 and the component module 2 can also be improved. When the easy-to-pull adhesive tape 6 is pulled, an external force can be transmitted to the whole battery 100 to exert uniform stress on the body module 1, the component module 2 and the easy-to-pull adhesive tape 6, thereby reducing the probability of stress concentration at a specific position of the easy-to-pull adhesive tape 6. For further improving the structural strength of the component module 2, as shown in Fig. 5, Fig. 7 and Fig. 8, a protective plate 21 may be arranged in the component module 2 to prevent the component module 2 from being damaged when the easy-to-pull adhesive tape 6 is pulled.

As shown in Fig. 1 and Fig. 5, multiple through holes 33 that are spaced are formed in the wrapping layer 3. When the first insulating film 4 is adhered to the wrapping layer 3, the first insulating film 4 covers the multiple through holes 33, and when the first insulating film 4 is pressed at the positions of the multiple through holes 33, a part of the first insulating film 4 may be pressed into the multiple through holes 33 so that the first insulating film 4 in the multiple through holes 3 may be directly adhered to the component module 2 to couple the body module 1 to the component module 2 more stably, thereby further improving the integrity of the body module 1 and the device body 2.

The whole wrapping layer 3 may be a Teflon film. It is to be noted that the Teflon film may be a film structure made from a Teflon material. Teflon may be called PTFE or may be called a "non-stick coating", an "easy-to-clean material", "king of plastic" or "halar". This material has the characteristics of resistance to acids, resistance to alkalis and resistance to various organic solvents. In addition, PTFE has the characteristic of resistance to high temperatures and a lubrication effect, and is extremely low in friction coefficient.

As shown in Fig. 5 and Fig. 6, a part of an edge of an aluminum-plastic film 16 for wrapping the body module 1 extends into the component module 2 and is wrapped with the wrapping layer 3. The first insulating film 4 or the second insulating film 5 covers a portion, for connecting with the component module 2, of the aluminum-plastic film 16. Therefore, the integrity of the body module 1 and the component module 2 may be improved. It can be understood that a part of the aluminum-plastic film 16 extends into the wrapping layer 3 and the first insulating film 4 or the second insulating film 5 covers a portion, for connecting with the wrapping layer 3, of the aluminum-plastic film 16, so that an edge of the wrapping layer 3 may also be prevented from being tilted.

As shown in Fig. 5 to Fig. 8, a battery tab 13 of the body module 1 extends from the body module 1 and is wrapped with the wrapping layer 3, and the battery tab 13 includes a third surface 14 and fourth surface 15 arranged opposite to each other, so that the battery 100 may be endowed with higher integrity. The wrapping layer 3 may include a first wrapping portion 31 and a second wrapping portion 32 coupled to the first wrapping portion 31, the first wrapping portion 31 wraps the side, close to the third surface 14, of the battery tab 13, the second wrapping portion 32 wraps the side, close to the fourth surface 15, of the battery tab 13, and at least one of the first wrapping portion 31 and the second wrapping portion 32 extends wriggly. It can be understood that, in the component module 2, the wrapping layer 3 may be arranged in a lamination manner to form a multilayer structure, so that the structural strength of the component module 2 can be strengthened, and the component module 2 can be prevented from being deformed in a pulling process of the easy-to-pull adhesive tape 6.

As shown in Fig. 2, the easy-to-pull adhesive tape 6 may be an auxiliary part for dismounting the battery 100, and may include an adhesion portion 61, an adhesive-free region 62 and a hand pulling portion 63. The adhesion portion 61 is located at one end of the easy-to-pull adhesive tape 6 and adhered to the second surface 12, the hand pulling portion 63 is located at the other end of the easy-to-pull adhesive tape 6, the hand pulling portion 63 bypasses the component module 2 and is then overlapped with the first insulating film 4, the hand pulling portion 63 is located on the side, away from the component module 2, of the first insulating film 4, the adhesive-free region 62 is located between the adhesion portion 61 and the hand pulling portion 63, and the adhesive-free region 62 is bonded to the wrapping layer 3.

The easy-to-pull adhesive tape 6 is an adhesion material and includes a TPU thin film and rubber glue. The rubber glue may be arranged on at least one side in upper and lower lateral surfaces of the TPU thin film. The rubber glue includes the following raw materials in parts by weight: 30 to 50 parts of thermoplastic rubber, 30 to 50 parts of a C5 petroleum resin, 20 to 40 parts of a terpene resin, 1 to 10 parts of a plasticizer, 0.1 to 2 parts of a pigment, 1 to 5 parts of polyisobutylene and 100 to 2,000 parts of toluene. The TPU thin film is 30 to 100 microns thick, and the rubber glue is 20 to 50 microns thick. The rubber glue is applied to the TPU thin film in a coating manner.

The hand pulling portion 63 of the easy-to-pull adhesive tape 6 may be a ring structure. There may be multiple easy-to-pull adhesive tapes 6 that are spaced, and the multiple easy-to-pull adhesive tapes 6 are parallel to one another. Therefore, when the body module 1 and the component module 2 are dismounted from the shell 7 by use of the easy-to-pull adhesive tape 6, the external force may be applied to the multiple easy-to-pull adhesive tapes 6, so that the external force may be decentralized to the battery 100, and the battery 100 may be uniformly stressed.

For improving coupling stability of the battery 100 and other parts, in an example of the application, as shown in Fig. 2, an adhesion region 17 is arranged on the sidewall surface, adhered to the adhesion portion 61, of the body module 1, and stickiness in the adhesion region 17 gradually increases in a direction from the adhesive-free region 62 to the adhesion portion 61. It can be understood that, for conveniently pulling one end of the battery 100 up by use of the easy-to-pull adhesive tape 6, a material with relatively low stickiness may be arranged at a position close to the end portion; and for improving the coupling stability and firmness of the battery 100 and the other parts, a material with relatively high stickiness is arranged at a portion close to the other end of the battery 100. The adhesive-free region of the easy-to-pull adhesive tape 6 is close to one end of the battery 100 and the adhesion portion 61 of the easy-to-pull adhesive tape 6 is close to the other end of the battery 100. For example, as shown in Fig. 2, on the surface, for connecting with the adhesion portion 61 of the easy-to-pull adhesive tape 6, of the body module 1, the stickiness of the adhesion region 17 gradually decreases in a direction from left to right.

As shown in Fig. 8, a part of the adhesive-free region 62 of the easy-to-pull adhesive tape 6 is opposite to one reinforcing rib 71, a groove 72 is formed in a portion, corresponding to the adhesive-free region 62, of the reinforcing rib 71, and an opening of the groove 72 faces the easy-to-pull adhesive tape 6. In such a manner, when the easy-to-pull adhesive tape 6 is pulled, the hand pulling portion 63 of the easy-to-pull adhesive tape 6 may be inclined towards the inside of the groove 72, and the body module 1 and the component module 2 may be pulled out along an inclination direction of the easy-to-pull adhesive tape 6, so that the external force may be uniformly transmitted to the battery 100 to avoid the easy-to-pull adhesive tape 6 being broken by excessive local stress.

As shown in Fig. 5 and Fig. 7 to Fig. 8, the adhesive-free region 62 is located in a corner of the component module 2, and the corner is located between the shell 7 and the corresponding reinforcing rib 71. When the battery 100 is dismounted from the shell 7 of the electronic device 200, the hand pulling portion 63 of the easy-to-pull adhesive tape 6 may be pulled to slowly pry the body module 1 and the component module 2 up to exert uniform stress on the body module 1, the component module 2 and the easy-to-pull adhesive tape 6, thereby reducing the probability of stress concentration at a specific position of the easy-to-pull adhesive tape 6. By virtue of the solution, the easy-to-pull adhesive tape 6 can be effectively prevented from being broken, meanwhile, the easy-to-pull adhesive tape 6 can also be prevented from deforming the films wrapping the body module 1 or the component module 2, and the body module 1 and the component module 2 can be conveniently dismounted from the shell 7.

In the related art, a wrapping layer with relatively high stickiness wraps the component module, and because an adhesion stress between the wrapping layer with the relatively high stickiness and a first insulating layer or a second insulating layer is relatively strong, when the easy-to-pull adhesive tape drives the battery, stress concentration is easily formed at the position, contacting with an edge of the battery, of the easy-to-pull adhesive tape, making the easy-to-pull adhesive tape be easily broken by the component module.

In the embodiments of the application, when the battery 100 is dismounted from the shell 7 of the electronic device 200, the hand pulling portion 63 of the easy-to-pull adhesive tape 6 is overlapped with the first insulating layer, as shown in Fig. 5 and Fig. 7. The hand pulling portion 63 of the easy-to-pull adhesive tape 6 may be pulled to pry the body module 1 and the component module 2 up, so that resistance may be reduced when the easy-to-pull adhesive tape 6 starts to be pulled. Because the adhesion portion 61 of the easy-to-pull adhesive tape 6 is adhered to the second surface 12, the easy-to-pull adhesive tape 6 can drive the battery 100 to move, so that the battery 100 may be dismounted from the shell 7.

In such a manner, the body module 1 and the component module 2 are integrated by use of the first insulating film 4 and the second insulating film 5, the easy-to-pull adhesive tape 6 is provided with the adhesive-free region 62 which is bonded to the wrapping layer 3, so that when the easy-to-pull adhesive tape 6 is pulled, the external force can be transmitted to the whole battery 100 to exert uniform stress on the body module 1, the component module 2 and the easy-to-pull adhesive tape 6, thereby reducing the probability of stress concentration at a specific position of the easy-to-pull adhesive tape 6. By virtue of the solution, the easy-to-pull adhesive tape 6 can be effectively prevented from being broken, meanwhile, the easy-to-pull adhesive tape 6 can also be prevented from deforming the films wrapping the body module 1 or the component module 2, and the body module 1 and the component module 2 can be conveniently dismounted from the shell 7.

In the descriptions of the specification, descriptions made with reference to terms "an embodiment", "some embodiments", "schematic embodiment", "example", "specific example", "some examples" or the like imply inclusion of specific features, structures, materials or characteristics described in combination with the embodiment or the example in at least one embodiment or example of the application. In the specification, schematic expressions about the terms do not always refer to the same embodiment or example. Moreover, the specific features, structures, materials or characteristics that are described may be combined appropriately in any one or more embodiment or examples.

Although the embodiments of the application have been shown and described, those of ordinary skill in the art may know that various variations, modifications, replacements and transformations may be made to these embodiments without departing from the scope of the appended claims.

## Claims

1. A battery (100) for an electronic device, comprising:
a body module (1) having a first surface (11) and a second surface (12) that are oppositely provided;
a component module (2) coupled to the body module (1), wherein the component module (2) comprises an electrical component (22) configured to test performance of the battery (100);
a wrapping layer (3) configured to wrap the component module (2);
a first insulating film (4) arranged on the first surface (11), wherein a part of the first insulating film (4) extends to the component module (2) and is adhered to the wrapping layer (3);
a second insulating film (5) arranged on the second surface (12), wherein a part of the second insulating film (5) extends to the component module (2) and is adhered to the wrapping layer (3); and
at least one easy-to-pull adhesive tape (6), each easy-to-pull adhesive tape (6) comprising an adhesion portion (61), an adhesive-free region (62) and a hand pulling portion (63), wherein the adhesion portion (61) is located at one end of the easy-to-pull adhesive tape (6) and adhered to the second surface (12), the hand pulling portion (63) is located at the other end of the easy-to-pull adhesive tape (6), and the hand pulling portion (63) bypasses the component module (2) and is then overlapped with the first insulating film (4), the adhesive-free region (62) and the hand pulling portion (63) are located on an outside of the wrapping layer (3), the adhesive-free region (62) is located between the adhesion portion (61) and the hand pulling portion (63), and the adhesive-free region (62) is bonded to the wrapping layer (3).

2. The battery (100) for the electronic device as claimed in claim 1, wherein stickiness of both the first insulating film (4) and the second insulating film (5) is higher than stickiness of the wrapping layer (3).

3. The battery (100) for the electronic device as claimed in claim 1 or 2, wherein at least one through hole (33) is formed in a position, adhered to the first insulating film (4), of the wrapping layer (3), wherein the first insulating film (4) in the at least one through hole (33) is directly adhered to the component module (2).

4. The battery (100) for the electronic device as claimed in any one of claims 1 to 3, wherein a part of an edge of an aluminum-plastic film (16) configured to wrap the body module (1) extends into the component module (2) and is wrapped with the wrapping layer (3).

5. The battery (100) for the electronic device as claimed in any one of claims 1 to 4, wherein a battery tab (13) of the body module (1) extends from the body module (1) and is wrapped with the wrapping layer (3), and the battery tab (13) comprises a third surface (14) and a fourth surface (15) that are arranged opposite to each other; and
the wrapping layer (3) comprises a first wrapping portion (31) and a second wrapping portion (32) coupled to the first wrapping portion (31), the first wrapping portion (31) wraps a side, close to the third surface (14), of the battery tab (13), the second wrapping portion (32) wraps a side, close to the fourth surface (15), of the battery tab (13), and at least one of the first wrapping portion (31) and the second wrapping portion (32) extends wriggly.

6. The battery (100) for the electronic device as claimed in any one of claims 1 to 5, wherein
a portion, bonded to the at least one easy-to-pull adhesive tape (6), of the wrapping layer (3) is a Teflon film, or the portion, bonded to the at least one easy-to-pull adhesive tape (6), of the wrapping layer (3) is coated with a Teflon layer;
and/or,
the wrapping layer (3) is a Teflon film.

7. The battery (100) for the electronic device as claimed in any one of claims 1 to 6, wherein an adhesion region (17) is arranged on the second surface (12), and stickiness in the adhesion region (17) gradually increases in a direction from the adhesive-free region (62) to the adhesion portion (61).

8. The battery (100) for the electronic device as claimed in any one of claims 1 to 7, wherein there are multiple easy-to-pull adhesive tapes (6) that are spaced.

9. The battery (100) for the electronic device as claimed in claim 8, wherein there are two easy-to-pull adhesive tapes (6), and the two easy-to-pull adhesive tapes (6) form an intersected structure.

10. The battery (100) for the electronic device as claimed in any one of claims 1 to 9, wherein the hand pulling portion (63) is located on a side, away from the component module (2), of the first insulating film (4).

11. The battery (100) for the electronic device as claimed in any one of claims 1 to 10, wherein
the hand pulling portion (63) is of a ring structure;
or the hand pulling portion (63) is of a strip structure;
or the hand pulling portion (63) is of a flaky structure.

12. The battery (100) for the electronic device as claimed in any one of claims 1 to 11, wherein the body module (1) is a cell body of the battery.

13. An electronic device (200), comprising:
a shell (7), at least one reinforcing rib (71) being arranged on an inner surface of the shell (7); and
the battery (100) for the electronic device (200) as claimed in any one of claims 1 to 12, the battery (100) being close to the at least one reinforcing rib (71).

14. The electronic device (200) as claimed in claim 13, wherein a part of the adhesive-free region (62) of the easy-to-pull adhesive tape (6) is opposite to one reinforcing rib (71), a groove (72) is formed in a portion, corresponding to the adhesive-free region (62), of the reinforcing rib (71), and an opening of the groove (72) faces the easy-to-pull adhesive tape (6).

15. The electronic device (200) as claimed in claim 14, wherein the adhesive-free region (62) is located in a corner of the component module (2), and the corner is located between the shell (7) and the corresponding reinforcing rib (71).

## Patentansprüche

1. Batterie (100) für eine elektronische Vorrichtung, wobei die Batterie Folgendes umfasst:
ein Körpermodul (1), das eine erste Oberfläche (11) und eine zweite Oberfläche (12) aufweist, die gegenüberliegend vorgesehen sind;
ein Bauelementmodul (2), das mit dem Körpermodul (1) gekoppelt ist, wobei das Bauelementmodul (2) ein elektrisches Bauelement (22) umfasst, das zum Testen des Betriebsverhaltens der Batterie (100) konfiguriert ist;
eine Hüllschicht (3), die zum Einhüllen des Bauelementmoduls (2) konfiguriert ist;
einen ersten Isolierfilm (4), der auf der ersten Oberfläche (11) angeordnet ist, wobei ein Teil des ersten Isolierfilms (4) zu dem Bauelementmodul (2) verläuft und an der Hüllschicht (3) angehaftet ist;
einen zweiten Isolierfilm (5), der auf der zweiten Oberfläche (12) angeordnet ist, wobei ein Teil des zweiten Isolierfilms (5) zu dem Bauelementmodul (2) verläuft und an der Hüllschicht (3) angehaftet ist; und
wenigstens ein leicht zu ziehendes Klebeband (6), wobei jedes leicht zu ziehende Klebeband (6) einen Haftabschnitt (61), ein haftmittelfreies Gebiet (62) und einen Handziehabschnitt (63) umfasst, wobei sich der Haftabschnitt (61) an einem Ende des leicht zu ziehenden Klebebands (6) befindet und an der zweiten Oberfläche (12) angehaftet ist, wobei sich der Handziehabschnitt (63) an dem anderen Ende des leicht zu ziehenden Klebebands (6) befindet und wobei der Handziehabschnitt (63) das Bauelementmodul (2) umgeht und daraufhin mit dem ersten Isolierfilm (4) überlappt ist, wobei sich das haftmittelfreie Gebiet (62) und der Handziehabschnitt (63) auf einer Außenseite der Hüllschicht (3) befinden, wobei sich das haftmittelfreie Gebiet (62) zwischen dem Haftabschnitt (61) und dem Handziehabschnitt (63) befindet und wobei das haftmittelfreie Gebiet (62) mit der Hüllschicht (3) verbunden ist.

2. Batterie (100) für eine elektronische Vorrichtung nach Anspruch 1, wobei die Klebefähigkeit sowohl des ersten Isolierfilms (4) als auch des zweiten Isolierfilms (5) höher als die Klebefähigkeit der Hüllschicht (3) ist.

3. Batterie (100) für eine elektronische Vorrichtung nach Anspruch 1 oder 2, wobei an einer an dem ersten Isolierfilm (4) angehafteten Stelle der Hüllschicht (3) mindestens ein Durchgangsloch (33) gebildet ist, wobei der erste Isolierfilm (4) in dem wenigstens einen Durchgangsloch (33) direkt an das Bauelementmodul (2) angehaftet ist.

4. Batterie (100) für eine elektronische Vorrichtung nach einem der Ansprüche 1 bis 3, wobei ein Teil eines Rands eines Aluminium-Kunststoff-Films (16), der zum Umhüllen des Körpermoduls (1) konfiguriert ist, in das Bauelementmodul (2) verläuft und mit der Hüllschicht (3) umhüllt ist.

5. Batterie (100) für eine elektronische Vorrichtung nach einem der Ansprüche 1 bis 4, wobei eine Batteriezunge (13) des Körpermoduls (1) von dem Körpermodul (1) ausgeht und mit der Hüllschicht (3) umhüllt ist und wobei die Batteriezunge (13) eine dritte Oberfläche (14) und eine vierte Oberfläche (15), die einander gegenüberliegend angeordnet sind, umfasst; und
die Hüllschicht (3) einen ersten Hüllabschnitt (31) und einen zweiten Hüllabschnitt (32), der mit dem ersten Hüllabschnitt (31) gekoppelt ist, umfasst, wobei der erste Hüllabschnitt (31) eine Seite in der Nähe der dritten Oberfläche (14) der Batteriezunge (13) umhüllt, wobei der zweite Hüllabschnitt (32) eine Seite in der Nähe der vierten Oberfläche (15) der Batteriezunge (13) umhüllt und wobei der erste Hüllabschnitt (31) und/oder der zweite Hüllabschnitt (32) schlangenlinienförmig verlaufen.

6. Batterie (100) für eine elektronische Vorrichtung nach einem der Ansprüche 1 bis 5, wobei
ein mit dem wenigstens einen leicht zu ziehenden Klebeband (6) verbundener Abschnitt der Hüllschicht (3) ein Teflonfilm ist oder der mit dem wenigstens einen leicht zu ziehenden Klebeband (6) verbundene Abschnitt der Hüllschicht (3) mit einer Teflonschicht beschichtet ist;
und/oder
die Hüllschicht (3) ein Teflonfilm ist.

7. Batterie (100) für eine elektronische Vorrichtung nach einem der Ansprüche 1 bis 6, wobei auf der zweiten Oberfläche (12) ein Haftgebiet (17) angeordnet ist und wobei die Klebefähigkeit in dem Haftgebiet (17) in einer Richtung von dem haftmittelfreien Gebiet (62) zu dem Haftabschnitt (61) allmählich zunimmt.

8. Batterie (100) für eine elektronische Vorrichtung nach einem der Ansprüche 1 bis 7, wobei es mehrere leicht zu ziehende Klebebänder (6) gibt, die beabstandet sind.

9. Batterie (100) für eine elektronische Vorrichtung nach Anspruch 8, wobei es zwei leicht zu ziehende Klebebänder (6) gibt und wobei die zwei leicht zu ziehenden Klebebänder (6) eine geschnittene Struktur bilden.

10. Batterie (100) für eine elektronische Vorrichtung nach einem der Ansprüche 1 bis 9, wobei sich der Handziehabschnitt (63) auf einer von dem Bauelementmodul (2) entfernten Seite des ersten Isolierfilms (4) befindet.

11. Batterie (100) für eine elektronische Vorrichtung nach einem der Ansprüche 1 bis 10, wobei
der Handziehabschnitt (63) eine Ringstruktur aufweist;
oder der Handziehabschnitt (63) eine Streifenstruktur aufweist;
oder der Handziehabschnitt (63) schuppenförmige Struktur aufweist.

12. Batterie (100) für eine elektronische Vorrichtung nach einem der Ansprüche 1 bis 11, wobei das Körpermodul (1) ein Zellenkörper der Batterie ist.

13. Elektronische Vorrichtung (200), die Folgendes umfasst:
eine Kapsel (7), wenigstens eine Verstärkungsrippe (71), die an einer Innenoberfläche der Kapsel (7) angeordnet ist; und
die Batterie (100) für die elektronische Vorrichtung (200) nach einem der Ansprüche 1 bis 12, wobei die Batterie (100) in der Nähe der wenigstens einen Verstärkungsrippe (71) ist.

14. Elektronische Vorrichtung (200) nach Anspruch 13, wobei ein Teil des haftmittelfreien Gebiets (62) des leicht zu ziehenden Klebebands (6) einer Verstärkungsrippe (71) gegenüberliegt, wobei in einem dem haftmittelfreien Gebiet (62) entsprechenden Abschnitt der Verstärkungsrippe (71) eine Nut (72) gebildet ist und wobei eine Öffnung der Nut (72) dem leicht zu ziehenden Klebeband (6) zugewandt ist.

15. Elektronische Vorrichtung (200) nach Anspruch 14, wobei sich das haftmittelfreie Gebiet (62) in einer Ecke des Bauelementmoduls (2) befindet und wobei sich die Ecke zwischen der Kapsel (7) und der entsprechenden Verstärkungsrippe (71) befindet.

## Revendications

1. Batterie (100) pour un dispositif électronique, comprenant :
un module de corps (1) ayant une première surface (11) et une deuxième surface (12) qui sont prévues à l'opposé ;
un module de composant (2) couplé au module de corps (1), le module de composant (2) comprenant un composant électrique (22) configuré pour tester la performance de la batterie (100) ;
une couche d'enveloppement (3) configurée pour envelopper le module de composant (2) ;
un premier film isolant (4) disposé sur la première surface (11), une partie du premier film isolant (4) s'étendant jusqu'au module de composant (2) et adhérant à la couche d'enveloppement (3) ;
un deuxième film isolant (5) disposé sur la deuxième surface (12), une partie du deuxième film isolant (5) s'étendant jusqu'au module de composant (2) et adhérant à la couche d'enveloppement (3) ; et
au moins un ruban adhésif facile à tirer (6), chaque ruban adhésif facile à tirer (6) comprenant une portion d'adhésion (61), une région sans adhésif (62) et une portion d'arrachage manuel (63), la portion d'adhésion (61) étant située à une extrémité du ruban adhésif facile à tirer (6) et adhérant à la deuxième surface (12), la portion d'arrachage manuel (63) étant située à l'autre extrémité du ruban adhésif facile à tirer (6), et la portion d'arrachage manuel (63) contournant le module de composant (2) et chevauchant ainsi le premier film isolant (4), la région sans adhésif (62) et la portion d'arrachage manuel (63) étant situées à l'extérieur de la couche d'enveloppement (3), la région sans adhésif (62) étant située entre la portion d'adhésion (61) et la portion d'arrachage manuel (63), et la région sans adhésif (62) étant liée à la couche d'enveloppement (3).

2. Batterie (100) pour le dispositif électronique selon la revendication 1, l'adhésivité d'à la fois le premier film isolant (4) et le deuxième film isolant (5) étant supérieure à l'adhésivité de la couche d'enveloppement (3).

3. Batterie (100) pour le dispositif électronique selon la revendication 1 ou 2, au moins un trou traversant (33) étant formé dans une position, adhérant au premier film isolant (4), de la couche d'enveloppement (3), le premier film isolant (4) dans l'au moins un trou traversant (33) adhérant directement au module de composant (2).

4. Batterie (100) pour le dispositif électronique selon l'une quelconque des revendications 1 à 3, une partie d'un bord d'un film aluminium-plastique (16) configuré pour envelopper le module de corps (1) s'étendant dans le module de composant (2) et étant enveloppée avec la couche d'enveloppement (3).

5. Batterie (100) pour le dispositif électronique selon l'une quelconque des revendications 1 à 4, une languette (13) de batterie du module de corps (1) s'étendant depuis le module de corps (1) et étant enveloppée par la couche d'enveloppement (3), et la languette (13) de batterie comprenant une troisième surface (14) et une quatrième surface (15) qui sont disposées à l'opposée l'une de l'autre ; et
la couche d'enveloppement (3) comprenant une première portion d'enveloppement (31) et une deuxième portion d'enveloppement (32) couplée à la première portion d'enveloppement (31), la première portion d'enveloppement (31) enveloppant un côté, proche de la troisième surface (14), de la languette (13) de batterie, la deuxième portion d'enveloppement (32) enveloppant un côté, proche de la quatrième surface (15), de la languette (13) de batterie, et la première portion d'enveloppement (31) et/ou la deuxième portion d'enveloppement (32) s'étendant en zigzag.

6. Batterie (100) pour le dispositif électronique selon l'une quelconque des revendications 1 à 5,
une portion, liée à l'au moins un ruban adhésif facile à tirer (6), de la couche d'enveloppement (3) étant un film en Téflon, ou la portion, liée à l'au moins un ruban adhésif facile à tirer (6), de la couche d'enveloppement (3) étant recouverte d'une couche de Téflon ;
et/ou
la couche d'enveloppement (3) étant un film en Téflon.

7. Batterie (100) pour le dispositif électronique selon l'une quelconque des revendications 1 à 6, une région d'adhésion (17) étant disposée sur la deuxième surface (12), et l'adhésivité de la région d'adhésion (17) augmentant graduellement dans un sens de la région sans adhésif (62) à la portion d'adhésion (61).

8. Batterie (100) pour le dispositif électronique selon l'une quelconque des revendications 1 à 7, de multiples rubans adhésifs faciles à tirer (6) qui sont espacés étant présents.

9. Batterie (100) pour le dispositif électronique selon la revendication 8, deux rubans adhésifs faciles à tirer (6) étant présents, et les deux rubans adhésifs faciles à tirer (6) formant une structure entrecoupée.

10. Batterie (100) pour le dispositif électronique selon l'une quelconque des revendications 1 à 9, la portion d'arrachage manuel (63) étant située d'un côté, éloigné du module de composant (2), du premier film isolant (4).

11. Batterie (100) pour le dispositif électronique selon l'une quelconque des revendications 1 à 10,
la portion d'arrachage manuel (63) étant une structure circulaire ;
ou la portion d'arrachage manuel (63) étant une structure en bande ;
ou la portion d'arrachage manuel (63) étant une structure feuilletée.

12. Batterie (100) pour le dispositif électronique selon l'une quelconque des revendications 1 à 11, le module de corps (1) étant un corps de cellule de la batterie.

13. Dispositif électronique (200), comprenant :
une coque (7), au moins une nervure de renforcement (71) disposée sur une surface interne de la coque (7) ; et
la batterie (100) pour le dispositif électronique (200) selon l'une quelconque des revendications 1 à 12, la batterie (100) étant proche de l'au moins une nervure de renforcement (71).

14. Dispositif électronique (200) selon la revendication 13, une partie de la région sans adhésif (62) du ruban adhésif facile à tirer (6) étant opposée à une nervure de renforcement (71), une rainure (72) étant formée dans une portion, correspondant à la région sans adhésif (62), de la nervure de renforcement (71), et une ouverture de la rainure (72) faisant face au ruban adhésif facile à tirer (6).

15. Dispositif électronique (200) selon la revendication 14, la région sans adhésif (62) étant située dans un coin du module de composant (2), et le coin étant situé entre la coque (7) et la nervure de renforcement (71) correspondante.
